**Europäisches Patentamt**

(19) **European Patent Office**

**Office européen des brevets**

(11) Veröffentlichungsnummer: **0 105 544**
**B1**

(12) # EUROPÄISCHE PATENTSCHRIFT

(45) Veröffentlichungstag der Patentschrift:
**16.12.87**

(51) Int. Cl.⁴: **H 02 K 7/118,** H 02 K 7/06,
A 47 J 19/02

(21) Anmeldenummer: **83201269.4**

(22) Anmeldetag: **05.09.83**

(54) **Elektromotorisch angetriebenes Gerät.**

(30) Priorität: **07.09.82 AT 3346/82**

(43) Veröffentlichungstag der Anmeldung:
**18.04.84 Patentblatt 84/16**

(45) Bekanntmachung des Hinweises auf die Patenterteilung:
**16.12.87 Patentblatt 87/51**

(84) Benannte Vertragsstaaten:
**AT DE FR GB IT**

(56) Entgegenhaltungen:
**AT-B-355 752**
**CH-A-442 504**
**FR-A-2 266 975**
**FR-A-2 335 753**

(73) Patentinhaber: **N.V. Philips' Gloeilampenfabrieken,
Groenewoudseweg 1, NL-5621 BA Eindhoven (NL)**

(72) Erfinder: **Bukoschek, Romuald Leander, p/a INT.
OCTROOIBUREAU B.V. Prof. Holstlaan 6, NL-
5656 AA Eindhoven (NL)**
Erfinder: **Diefenbach, Gerhard, p/a INT.
OCTROOIBUREAU B.V. Prof. Holstlaan 6, NL-
5656 AA Eindhoven (NL)**

(74) Vertreter: **Bos, Kornelis Sjoerd, INTERNATIONAAL
OCTROOIBUREAU B.V. Prof. Holstlaan 6, NL-
5656 AA Eindhoven (NL)**

EP 0 105 544 B1

## Beschreibung

Die Erfindung betrifft ein elektromotorisch angetriebenes Gerät, z. B. Zitruspresse, Zwiebelschneider oder dgl., bei dem ein Werkzeug über ein Getriebe von einem selbstanlaufenden Einphasensynchronmotor her angetrieben wird, welcher einen zwischen zwei einander gegenüberliegenden, ein Statorfeld bildenden Statorpolen angeordneten, zur Bildung eines Läuferfeldes diametral magnetisierten, dauermagnetischen Läufer aufweist, und eine durch Anschläge gebildete Stoppeinrichtung vorgesehen ist, die den Läufer in mindestens einer Drehrichtung, nach Ausführung einer bestimmten Anzahl von Umdrehungen, zum Anhalten bringt, wobei dieser von sich aus seine Drehrichtung umkehrt. Ein derartiges Gerät ist aus der AT-PS 355 752 bekannt.

Die Erfindung liegt die Aufgabe zugrunde der Stoppeinrichtung weiter zu verbessern, so dass das Umkehren der Drehrichtung des Läufers besonders exakt und sicher erfolgt, so dass es dabei zu keinen Pendelerscheinungen oder einem sogenannten Stottern kommt.

Diese Aufgabe wird gemäss der Erfindung gelöst durch die im Kenzeichen des Anspruchs 1 angegebenen Merkmale.

Auf diese Weise ist erreicht, dass der Läufer immer nur in solchen Lagen angehalten und zur Drehrichtungsumkehr gebracht wird, in welchen der Motor ein grosses Antriebsmoment aufweist, durch welches dann das Anlaufen in der umgekehrten Drehrichtung stets einwandfrei und sicher erfolgt. Ein solches entsprechend grosses Antriebsmoment ist beim Umkehren der Drehrichtung insbesondere aus deshalb wichtig, weil beim Wirksamwerden der Stoppeneinrichtung auch eine zusätzliche Belastung für den Motor entstehen kann.

An sich ist aus der FR-A-2 266 975 eine Vorrichtung mit einem synchronmotor bekannt wobei nach Ausschalten des Motors der Läufer in eine bestimmte Lage gebracht wird, aus der der Motor immer wieder anlaufen kann. Diese Anlaufvorrichtung weist eine auf der Welle des Läufers angeordnete Nockenscheibe auf, der mit federbelastesten Anpresselementen zusammen arbeitet und nach Anhalten des Läufers der Anlauflage bestimmen.

Um die Lagen des Läufers, in denen er durch die Stoppeinrichtung angehalten wird, entsprechend festlegen zu können, kann beispielsweise vorgesehen sein, die Anschläge der Stoppeinrichtung einstellbar auszubilden. Bei einem Gerät, bei dem das Werkzeug vom Einphasensynchronmotor her über ein formschlüssiges Getriebe angetrieben wird, wobei an einem Getriebeteil desselben die Stoppeinrichtung angreift, hat sich im Hinblick auf eine einfache Konstruktion und Montage des Gerätes als vorteilhaft erwiesen, wenn das Getriebe vom Motor bis zum Getriebeteil, an dem die Stoppeinrichtung angreift, ein ganzzahliges Übersetzungsverhältnis aufweist und einerseits am Getriebeteil und anderseits an einem gerätefesten Teil Markierungen angebracht sind, die miteinander zur Deckung gebracht die Lagen des Läufers festlegen, in denen er durch die Stoppeinrichtung angehalten wird. Wie ersichtlich, wird auf diese Weise nicht nur ein einfacher Geräteaufbau erreicht, sondern wird im Zuge der Montage des Geräte durch das Indeckungbringen der Markierungen auf einfache Weise sichergestellt, dass der Läufer durch die Stoppeinrichtung in den gewünschten Lagen, in denen ein eentsprechend grosses Antriebsmoment vorliegt, angehalten wird, ohne dass zusätzliche Einstelleinrichtungen notwendig sind. Die Ausbildung der Markierungen kann dabei in der verschiedensten Weise erfolgen, wie beispielsweise durch Strichmarken oder durch Ausnehmungen u.dgl.

Im Hinblick auf eine sehr kompakte Bauweise hat sich jedoch als vorteilhaft erwiesen, wenn die Nut spiralförmig ausgebildet und an einer Seitenfläche eines den Getriebeteil bildenden Zahnrades vorgesehen ist.

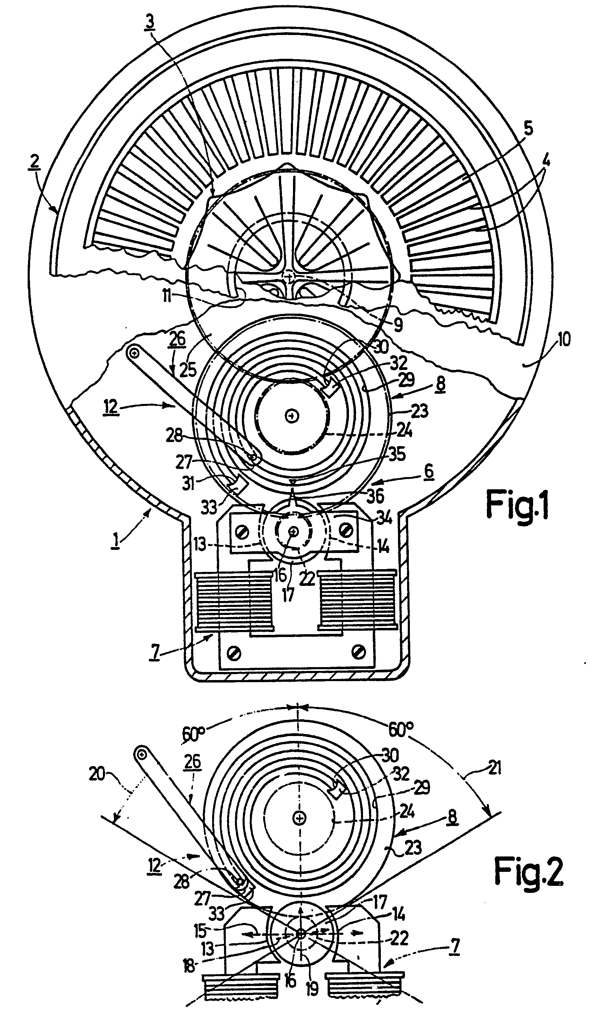

Die Erfindung wird im folgenden an Hand der Zeichnung, in welcher ein Ausführungsbeispiel der Erfindung dargestellt ist, auf welches sie jedoch nicht beschränkt sein soll, näher erläutert. Fig. 1 zeigt in Draufsicht und teilweise im Schnitt eine Zitruspresse, deren Presskegel über ein Zahnradgetriebe von einem selbstanlaufenden Einphasensynchronmotor her angetrieben wird, wobei die Stoppeinrichtung an einem Zahnrad des Getriebes angreift. Fig. 2 zeigt schematisch einen Ausschnitt der Zitruspresse nach Fig. 1 zur Verdeutlichung der erfindungsgemässen Wirkungsweise.

Die in Fig. 1 dargestellte Zitruspresse besteht aus einem Basisgerät 1, einem Auffangbehälter 2 und einem rotierend antreibbaren Presskegel 3, an dem auch ein Öffnungen 4 aufweisendes Sieb 5 angeformt ist. Das Basisgerät 1 enthält eine Antriebseinrichtung 6 für den Presskegel 3, die aus einem selbstanlaufenden Einphasensynchronmotor 7 und einem Getriebe 8 besteht, das eine geräteseitig gelagerte Achse 9 antreibt, die in vertikaler Richtung aus dem Basisgerät 1 herausragt und auf die der Presskegel 3 unverdrehbar aufsteckbar ist. Der Auffangbehälter 2 ist kreisringförmig ausgebildet und wird auf eine horizontal verlaufende Auflagefläche 10 des Basisgerätes 1 aufgesetzt, wobei die Achse 9 durch die zentrale Öffnung 11 des Auffangbehälters 2 hindurchragt. Danach wird der Presskegel 3 auf das freie Ende der Achse 9 aufgesteckt, wobei dann das mit ihm verbundene Sieb 5 innerhalb das Auffangbehälters 2 zu liegen kommt, so dass der vom Presskegel 3 abfliessende Saft durch die Öffnungen 4 des Siebes 5 in den Auffangbehälter 2 gelangt.

Das Auspressen von Zitrusfrüchten wird begünstigt, wenn der Presskegel eine oszillierende Drehbewegung ausführt, wenn er also von Zeit zu Zeit periodisch seine Drehrichtung umkehrt. Hierbei kann vorgesehen sein, dass der Presskegel eine oder mehrere Umdrehungen in einer Drehrichtung ausführt, oder auch nur über einen Winkelbereich von weniger als 360° gedreht wird und dann seine Drehrichtung umkehrt. In bekannter Weise wird eine solche oszillierende Drehbewegung einfach dadurch erhalten, dass zum Antrieb ein selbstanlaufender Einphasensynchronmotor verwendet wird, welcher einen zwischen zwei einander gegenüberliegenden, ein Statorfeld bildenden Statorpolen angeordneten zur Bildung eines Läuferfeldes diametral magnetisierten, dauermagnetischen Läufer aufweist, da ein solcher Motor die Eigenschaft hat, dass sein Läufer, wenn er zwangsweise angehalten wird, von sich aus seine Drehrichtung umkehrt. Ein solches Anhalten des Läufers nach Ausführung einer bestimmten Anzahl von Umdrehungen erfolgt mittels einer Stoppeinrichtung 12, die in üblicher Weise durch Anschläge gebildet ist. Die Stoppeinrichtung 12 kann als eigene, von der Motorwelle her angetriebene Baueinheit ausgebildet sein, oder sie kann auch Bestandteil des zwischen dem Mosor 7 und dem Presskegel 3 vorgesehenen Getriebes 8 sein, wie dies beim vorliegenden Ausführungsbeispiel der Fall ist, worauf noch im nachfolgenden eingegangen wird.

Es hat sich gezeigt, dass eine solche Zitruspresse nicht unter allen Umständen vollständig zufriedenstellend arbeitet, da es bei der Drehrichtungsumkehr zu Pendelerscheinungen bzw. einem sog. Stottern im Bewegungsablauf des Presskegels kommen kann, weil das Anlaufen des Motors in der umgekehrten Drehrichtung zufolge ungünstiger Anlaufbedingungen nicht exakt, sondern nur zögernd erfolgt, was unter anderem auch durch das Wirksamwerden der Stoppeinrichtung bedingt sein kann, da diese den Motor unter Umständen zusätzlich belastet. Bekanntlich ist gerade bei selbstanlaufenden zweipoligen Einphasensynchronmotoren mit diametral magnetisiertem dauermagnetischem Läufer das Selbstanlaufen relativ kritisch. So muss der Läufer eines solchen Motors bei nichterregtem Stator eine ganz bestimmte Ruhelage einnehmen, die ein entsprechend grosses Anlaufmoment sicherstellt, was dann der Fall ist, wenn der durch die Läuferachse gehende Vektor seines Läuferfeldes einen bestimmten relativ kleinen Winkel zur Richtung des Statorfeldes einnimmt. Eine solche Ruhelage des Läufers wird dadurch erreicht, dass den Statorpolen eine unsymmetrische Form gegeben wird. Die diesbezüglichen Verhältnisse sind in Fig. 2 in der an sich die Verhältnisse bei Wirksamwerden der Stoppeinrichtung 12 angegeben sind, zusätzlich schematisch eingezeichnet. Das zwischen den Statorpolen 13 und 14 verlaufende Statorfeld ist durch den strichlierten Doppelpfeil 15 und der durch die Läuferachse 16 gehende Vektor des dauermagnetischen Feldes diametral magnetisierten Läufers 17 ist durch den ebenfalls strichlierten Pfeil 18 angegeben. In der Ruhelage des Läufers 17, wobei der Stator nicht erregt ist, schliesst dann der Vektor 18 mit der Richtung 15 des Statorfeldes einen Winkel von etwa 9° ein. Auf diese Weise ist sichergestellt, dass der Läufer von selbst anlaufen kann, wenn die Erregung des Motors eingeschaltet wird. Bei einem solchen Selbstanlaufen nimmt der Läufer 17 eine der beiden Drehrichtungen an, je nach den momentan vorliegenden Feldgegebenheiten.

Wenn nun der Läufer eines solchen Motors vom Lauf heraus angehalten wird und er dabei von sich aus seine Drehrichtung umkehrt, kann das Anlaufen in der umgekehrten Drehrichtung noch kritischer sein als das Selbstanlaufen aus der Ruhelage heraus. Bei einem solchen zwangsweise Umkehren der Drehrichtung kann es dabei zu einem zeitweise relativ starken Pendeln des Läufers kommen, was kein einwandfreies exaktes Umkehren der Drehrichtung zur Folge hat, wobei dann ein solches Pendeln über das Getriebe 8, das als Untersetzungsgetriebe ausgebildet ist, in noch verstärktem Ausmass auf den Presskegel übertragen wird, was sich bei der Benutzung des Gerätes unangenehm bemerkbar macht. Dieses nachteilige Verhalten kann nun dadurch vermieden werden, dass die Stoppeinrichtung 12 den Läufer 17 in Lagen anhält, in denen der durch die Läuferachse 16 gehende Vektor 18 seines Läuferfeldes in Bezug auf eine durch die Läuferachse 16 gehende, senkrecht zum Statorfeld 15 verlaufende Richtung, die in Fig. 2 durch den Pfeil 19 angegeben ist, innerhalb eines in beiden Drehrichtungen des Läufers 17 gesehenen gesamten Winkelbereiches von jeweils 60° liegt, wie dies die Doppelpfeile 20 und 21 angeben. Dies ist darauf zurückzuführen, dass, wenn sich der Läufer in solchen wie vorstehend angeführten Lagen befindet, der Motor ein relativ grosses Antriebsmoment aufweist, welches dann bewirkt, dass das Umkehren der Drehrichtung einwandfrei und sicher erfolgt. Besonders günstige Verhältnisse werden dabei erhalten, wenn sich beim Wirksamwerden der Stoppeinrichtung der Läufer in einer Lage befindet, in der der Vektor 18 seines Läuferfeldes senkrecht oder annähernd senkrecht zum Statorfeld 15 verläuft. Um nun das Anhalten des Läufers 17 mit seinem Läuferfeldvektor 18 innerhalb des bevorzugten Winkelbereiches, der sich aus den Winkelbereichen 20 und 21 zusammensetzt, zu bewirken, ist es lediglich erforderlich, dass die Stoppeinrichtung 12 dann zur Wirkung kommt, wenn sich der Läufer in diesen bevorzugten Lagen befindet, was durch entsprechende Ausbildung der Stoppeinrichtung hinsichtlich der Lage ihrer Anschläge ohne weiteres zu erreichen ist.

Beim vorliegenden Ausführungsbeispiel wird der Presskegel 3 vom Einphasensynchronmotor 7 her über ein formschlüssiges Getriebe 8, im vorliegenden Fall ein Zahnradgetriebe, angetrieben, das aus einem auf der Läuferachse 16 sitzenden Zahnrad 22, einem mit diesem kämmenden, geräteseitig gelagerten Zahnrad 23, das seinerseits ein weiteres Zahnrad 24 trägt, welches wiederum mit einem Zahnrad 25 kämmt, das auf der Achse 9 sitzt, gebildet ist. An sich könnte natürlich auch ein Schneckengetriebe oder ein kombiniertes Schnecken- und Zahnradgetriebe vorgesehen sein. Je nachdem, wie das Übersetzungsverhältnis dieses Getriebes 8 gewählt ist und über welche Umfangbereiche eine oszillierende Drehbewegung des Presskegels 3 gewünscht ist, kann nun an einem dieser Getriebeteile die durch Anschläge gebildete, in beiden Drehrichtungen wirksame Stoppeinrichtung 12 angreifen. Beim vorliegenden Ausführungsbeispiel ist hierfür das Zahnrad 23 vorgesehen und ist das Übersetzungsverhältnis zwischen den Zahnrädern 22 und 23 ganzzahlig gewählt, was erforderlich ist, damit der Läufer 17 stets in den gleichen gewünschten Lagen angehalten wird und sich keine Lageänderungen beim fortlaufend nacheinander erfolgenden Anhalten zur periodischen Umkehrung der Drehrichtung ergeben.

Die hier vorgesehene Stoppeinrichtung 12 zeichnet sich durch einen besonders einfachen und raumsparenden Aufbau aus. Sie besteht aus einem geräteseitig schwenkbar gelagerten Arm 26, dessen freies Ende 27, hier mittels eines an diesem freien Ende vorgesehenen Stiftes 28, in einer an einer Seitenfläche des Zahnrades 23 vorgesehenen spiralförmig ausgebildeten Nut 29 geführt ist. Diese Nut 29 weist mehrere Gänge auf und ist an ihren beiden Enden 30 und 31 abgeschlossen, wozu hier im Bereich dieser Enden 30 und 31 Anschläge in Form von Ansätzen 32 und 33 vorgesehen sind, die zum Zusammenwirken mit dem freien Ende 27 des Armes 26 dienen, welches dann einen Gegenanschlag für die Stoppeinrichtung bildet. An sich wäre es natürlich auch möglich, dass die beiden Enden 30 und 31 der Nut 29 unmittelbar als Anschläge herangezogen werden, mit welchen dann als Gegenanschlag der Stift 28 am freien Ende 27 des Armes 26 zusammenwirken kann. Je nach der Drehrichtung des Zahnrades 23 wird über den Stift 28 der Arm 26 verschwenkt, und zwar entweder zu einem grösseren oder zu einem kleineren Durchmesser des Zahnrades 23 hin. Dies geschieht solange, bis das freie Ende 27 des Armes 26 entweder am Ansatz 32 oder am Ansatz 33 anschlägt, was zur Folge hat, dass das Zahnrad 23 angehalten wird. Zufolge des formschlüssigen Getriebes zwischen dem Zahnrad 23 und dem Läufer 17 des Motors 7 wird dabei auch der Läufer 17 zwangsweise angehalten, was weiters zur Folge hat, dass der Läufer 17 seine Drehrichtung umkehrt, womit auch das Zahnrad 23 seine Drehrichtung umkehrt. Bei dieser Umkehrung der Drehrichtung des Zahnrades 23 kommt das freie Ende 27 des Armes 26 wieder von dem betreffenden Anschlag 32 bzw. 33 frei, wonach dann der Arm 26 über den in der Nut 29 gleitenden Stift 28 in die entgegengesetzte Richtung verschwenkt wird, solange bis sein freies Ende 27 am anderen Ansatz 32 bzw. 33 anschlägt, was in analoger Weise zur Folge hat, dass die Drehrichtung des Läufers 17 abermals umgekehrt wird. Somit führt das Zahnrad 23 eine oszillierende Drehbewegung aus, die dann über die weiteren Zahnräder 24 und 25 auf die Achse 9 und damit auch auf den Presskegel 3 übertragen wird. Die Anzahl der Gänge der Nut 29 und damit ihre Länge von einem Ende 30 bis zum anderen Ende 31 ist zusammen mit den Übersetzungsverhältnissen im Getriebe 8 bestimmend für die Periodendauer der nacheinander erfolgenden Umkehrungen der Drehrichtung.

In Fig. 2 ist eine Lage des Zahnrades 23 und des Armes 26 dargestellt, in der die Stoppeinrichtung 12 gerade zur Wirkung kommt, dadurch, dass das freie Ende 27 des Armes 26 am Ansatz 33 anschlägt, wodurch das Zahnrad 23 angehalten wird. Hierbei soll dann der Läufer 17 des Motors 7 gerade eine solche Lage haben, in der der Vektor 18 seines Läuferfeldes im wesentlichen mit der Richtung des Pfeiles 19 übereinstimmt, wodurch dann, wie bereits erläutert, ein optimales Antriebsmoment für die Umkehrung der Drehrichtung des Läufers 17 gegeben ist. Entsprechendes gilt, wenn nach der Umkehrung der Drehrichtung das freie Ende 27 des Armes 26 am Ansatz 32 anschlägt, wobei dann wieder das Zahnrad 23 und der Läufer 17 angehalten werden, und zwar der Läufer 17 zweckmässigerweise wieder in einer solchen Lage, dass der Vektor 18 seines Läuferfeldes im wesentlichen mit der Richtung des Pfeiles 19 zusammenfällt. Selbstverständlich sind dabei um 180° gedrehte Lagen des Läufers 17 hinsichtlich der angestrebten Wirkungsweise vollkommen gleichwertig, so dass der Läufer 17 auch in solchen Lagen angehalten werden kann.

Wie aus Vorstehendem ersichtlich ist, bestimmen die Lagen der Ansätze 32 und 33 diejenigen Lagen, in welchen der Läufer 17 zum Anhalten gebracht wird. Dies bedeutet aber, dass bei der Montage des Gerätes das Zahnrad 23 in einer ganz bestimmten Lage in das Getriebe 8 eingesetzt werden muss, da sich dabei der Läufer 17 des Motors 7 in seiner definierten Ruhelage befindet. In diesem Zusammenhang hat sich als besonders vorteilhaft erwiesen, wenn einerseits am Zahnrad 23, an dem die Stoppeinrichtung 12 angreift, und andererseits an einem gerätefesten Teil, hier im Lagerschild 34 des Motors 7, wie in Fig. 1 dargestellt, Markierungen 35 bzw. 36 angebracht sind, die miteinander zur Deckung gebracht die Lagen des Läufers festlegen, in denen er durch die Stoppeinrichtung 12 in beiden Drehrichtungen nach Ausführung einer bestimmten Anzahl von Umdrehungen angehalten wird. Im vorliegenden Fall ist die Markierung 35 am Zahnrad 23 durch ein optisches Zeichen und die Markierung 36 am Lagerschild 34 durch einen zeigerförmigen Ansatz gebildet. Die Markierung 35 ist dabei an einer solchen Stelle des Zahnrades 23 angebracht, dass, wenn das Zahnrad mit der Markierung 35 fluchtend zur Markierung 36 eingesetzt wird und der Stift 28 am freien Ende 27 des Arms 26 dann beispielsweise in den innersten Gang der Nut 29 eingesetzt ist, der Läufer 17 die gewünschten Lagen hinsichtlich der Richtung seines Läuferfeldes erreicht, wenn die Stoppeinrichtung zur Wirkung kommt. Auf diese Weise gestaltet sich die Montage der Antriebseinrichtung 6 besonders einfach und ist immer sichergestellt, dass die Stoppeinrichtung den Läufer in der gewünschten Art und Weise zum Anhalten bringt.

Für die Ausbildung der Markierungen an sich gibt es natürlich eine Reihe von Möglichkeiten, wie ohne weiteres einzusehen ist. In diesem Zusammenhang sei beispielsweise nur erwähnt, dass im Zahnrad 23 auch eine durchgehende Bohrung vorgesehen sein kann, die mit einer geräteseitig feststehenden Bohrung zur Deckung zu bringen ist, wonach dann in beide Bohrungen ein Stift eingesetzt werden kann, der die Lage des Zahnrades 23 im Zuge der weiteren Montage des Gerätes sicherstellt und der dann nach beendeter Montage wieder entfernt wird.

Eine wie hier beschriebene Stoppeinrichtung 12 hat sich auch dahingehend als vorteilhaft erwiesen, dass nur durch Entfernung des Armes 26 aus dem Gerät, dieses in ein Gerät umgewandelt werden kann, bei dem das Werkzeug keine oszillierende Drehbewegung ausführt, falls dies erwünscht ist.

Ebenfalls als zweckmässig hat sich erwiesen, wenn in die Nut 29 der Stoppeinrichtung 12 ein relativ zähes Fett eingebracht wird, wodurch eine Dämpfung der Antriebseinrichtung 8 bewirkt wird, die sich dann auch auf den Einphasensynchronmotor auswirkt und einen gleichmässigeren Lauf desselben und weniger Geräuschentwicklung zur Folge hat.

Wie ersichtlich, gibt es eine Reihe von Abwandlungen des im vorstehenden beschriebenen Ausführungsbeispiels, ohne dass dabei der Rahmen der Erfindung verlassen wird. Dies gilt insbesondere im Zusammenhang mit der Ausbildung der Stoppeinrichtung an sich. Die erfindungsgemässen Massnahmen sind aber auch bei anderen Geräten als der beschriebenen Zitruspresse anwendbar, nämlich bei allen solchen Geräten, deren Werkzeug entweder eine rotierende Bewegung mit Umkehrung der Drehrichtung oder eine hin- und hergehende Bewegung ausführt und bei denen zum Antrieb des Werkzeuges ein selbstanlaufender zweipoliger Einphasensynchronmotor mit diametral magnetisiertem dauermagnetischem Läufer zur Anwendung kommt, wobei dessen Eigenschaft, dass sein Läufer, wenn er zwangsweise angehalten wird, von sich aus seine Drehrichtung umkehrt, dazu ausgenützt wird, die Umkehrung der Bewegungsrichtung des Werkzeuges zu bewirken. Als Beispiele für Geräte mit einem Werkzeug, das eine hin- und hergehenden Bewegung ausführt, seien Zwiebelschneider oder Kartoffelschneider erwähnt, bei welchen das Werkzeug durch einen Messersatz gebildet ist, der zumindest einmal hin- und herbewegt wird.

## Patentansprüche

Elektromotorsisch angetriebenes Gerät, z. B. Zitruspresse, Zwiebelschneider o.dgl., bei dem ein Werkzeug (3) über ein Getriebe (8) von einem selbstanlaufenden Einphasensynchronmotor (7) her angetrieben wird, welcher einen zwischen gegenüberliegenden, ein Statorfeld (15) bildenden Statorpolen (13, 14) angeordneten, zur Bildung eines Läuferfeldes diametral magnetisierten, dauermagnetischen Läufer (17) auf Anschläge (32, 33) gebildete Stoppeinrichtung (12) vorgesehen ist, die den Läufer in mindestens einer Drehrichtung nach Ausführung einer bestimmten Anzahl von Umdrehungen, zum Anhalten bringt, wobei dieser von sich aus seine Drehrichtung umkehrt, dadurch gekennzeichnet, dass die an einem Getriebeteil angreifende Stoppeinrichtung (12) durch einen geräteseitig schwenkbar gelagerten Arm (26) gebildet ist, dessen freies Ende (27) in einer am Getriebeteil vorgesehenen, an ihren beiden Enden (30, 31) abgeschlossenen Nut (29) geführt ist, wobei die Enden der Nut die Lagen des Läufers (17) festlegen, in denen er durch die Stoppeinrichtung angehalten wird, und in denen der durch die Läuferachse (16) gehende Vektor (18) seines Läuferfeldes in Bezug auf eine durch die Läuferachse gehende, senkrecht zum Statorfeld (15) verlaufende Richtung (19) innerhalb eines in beiden Drehrichtungen des Läufers gesehenen gesamten Winkelbereiches (20, 21) von jeweils 60° liegt.

2. Gerät nach Anspruch 1, dadurch gekennzeichnet, dass das Werkzeug (3) vom Einphasensynchronmotor (7) her über ein formschlüssiges Getriebe (8) angetrieben wird, wobei am Getriebeteil desselben die Stoppeinrichtung (12) angreift, und dass das Getriebe vom Motor bis zum Getriebeteil, an dem die Stoppeinrichtung angreift, ein ganzzahliges Übersetzungsverhältnis aufweist und dass einerseits am Getriebeteil und andererseits am einem gerätefesten Teil Markierungen (35, 36) angebracht sind, die miteinander zur Deckung gebracht die Lagen des Läufers (17) festlegen, in denen er durch die Stoppeinrichtung angehalten wird.

3. Gerät nach Anspruch 2, dadurch gekennzeichnet, dass die Nut (29) spiralförmig ausgebildet und an einer Seitenfläche eines den Getriebeteil bildenden Zahnrades (23) vorgesehen ist.

## Claims

1. An appliance driven by an electric motor, for example a citrus press, an onion cutter or the like, in which a tool (3) is driven by a self-starting single-phase synchronous motor (7) via a drive mechanism (8), which motor comprises a diametrally magnetized permanentmagnet rotor (17) for the formation of a rotor field, which rotor is arranged between two facing stator poles (13,14) which form a stator field (15), and a stalling device (12) comprising stops (32,33) which stall the rotor after a specific number of revolutions in at least one direction of rotation, upon which the directiom of rotation of said rotor is reversed automatically, characterized in that the stalling device (12) which acts on the drive element comprises an arm (26) which is pivotally connected to the appliance and which has a free end (27) which is guided in a groove (29) which is formed in the drive element and which is closed at both ends (30,31) to define the positions in which the rotor (17) is stopped by the stalling device and in which the rotorfield vector (18) which intersects the rotor axis (16) relative to a direction (19) which intersects the rotor axis perpendicularly to the stator field (15) lies within a total angular range (20,21) of 60° in each direction of rotation of the rotor.

2. An appliance as claimed in Claim 1, characterized in that the tool (3) is driven by the single-phase synchronous motor (7) via a positive drive mechanism (8), the stalling device (12) acting on a drive element of said mechanism and in that the drive mechanism between the motor and the drive element on which the stalling device acts has an integral transmission ratio and the drive element and a stationary part of the applicance are provided with marks (35,36) which when they are made to coincide define the positions of the rotor (17) in which the rotor is stopped by the stalling device.

3. An appliance as claimed in Claim 2, characterized in that the groove (29) is spiral-shaped and is formed in a side face of a gear wheel (23) which forms the drive element.

**Revendications**

Appareil à entraînement par moteur électrique, par exemple un presse-agrumes, un coupe-oignons, ou d'autres appareils du même genre, dans lequel un outil (3) est entraîné, par l'intermédiaire d'un engrenage (8), par un moteur synchrone monophasé à autodémarrage (7), comportant, d'une part, un rotor (17) ayant une aimantation permanente diamétrale pour former un champ de rotor et disposé entre deux p*oles de stator opposés (13, 14) formant un champ de stator (15) et, d'autre part, un dispositif d'arrêt (12) qui est formé par des butées (32, 33) et qui, après un nombre déterminé de tours du rotor, fait arrêter le rotor dans au moins une direction de rotation, la direction de rotation étant inversée automatiquement après cet arrêt, caractérisé en ce que le dispositif d'arrêt (12) agissant sur une partie de l'engrenage est constitué par un bras (26) logé à pivotement du c*oté de l'appareil et dont l'extrémité libre (27) pénètre dans une gorge (29) fermée à ses deux extrémités (30, 31) et pratiquée dans ladite partie de l'engrenage, les extrémités de la gorge fixant les positions du rotor (17) dans lesquelles celui-ci est arrêté par le dispositif d'arrêt et dans lesquelles l'angle que le vecteur (18) de champ de rotor coupant l'axe de rotor (16) fait avec un sens (19) s'étendant perpendiculairement au champ de stator (5) et coupant par l'axe de rotor, est compris dans un domaine angulaire (20, 21) de 60° dans chacune des deux directions de rotation du rotor.

2. Appareil selon la revendication 1, caractérisé en ce que l'outil (3) est entraîné par le moteur synchrone monophasé (7) par l'intermédiaire d'un engrenage positif (8) sur ladite partie duquel agit le dispositif d'arrêt (12) et en ce que, à partir du moteur jusqu'à sa partie sur laquelle agit le dispositif d'arrêt, l'engrenage présente un rapport de transmission entier et en ce que ladite partie de l'engrenage d'une part et une partie stationnaire de l'appareil d'autre part présentent des marques (35 et 36) qui, amenées à coïncider l'une avec l'autre fixent les positions du rotor (17) dans lesquelles celui-ci est arrêté par le dispositif d'arrêt.

3. Appareil selon la revendication 2, caractérisé en ce que la gorge (29) est spiralée et est prévue dans une surface latérale d'une roue dentée (23) formant ladite partie de l'engrenage.

0 105 544

Fig.1

Fig.2